# EUROPEAN PATENT APPLICATION

(11) **EP 4 426 005 A1**
(43) Date of publication of application: **04.09.2024**
(21) Application number: 22885969.0
(22) Date of filing: 25.10.2022
(51) Int. Cl.: H04W 28/08

(54) **DATA OFFLOADING METHOD AND APPARATUS, ELECTRONIC DEVICE, AND STORAGE MEDIUM**

(30) Priority: 29.10.2021 CN 202111275394
(71) Applicant: ZTE Corporation, Shenzhen, Guangdong 518057 (CN)
(72) Inventor: ZHANG, Wanchun, Shenzhen, Guangdong 518057 (CN); WU, Feng, Shenzhen, Guangdong 518057 (CN); WANG, Lingbin, Shenzhen, Guangdong 518057 (CN)
(74) Representative: Boult Wade Tennant LLP
(86) International application number: PCT/CN2022/127429
(87) International publication number: WO 2023/072092

(57) **Abstract**

Embodiments of the present application relate to the field of communications, and disclose a data offloading method and apparatus, an electronic device and a storage medium. The application data offloading method includes: detecting a performance index representing real-time coupling between a primary carrier component and a secondary carrier component; selecting a data offloading strategy according to a detection result; distributing transmission data carried in the primary carrier component to the secondary carrier component according to the selected data offloading strategy; and sending the primary carrier component and the secondary carrier component to a terminal.

## Description

### CROSS-REFERENCE TO RELATED APPLICATIONS

The present application claims priority to Chinese Patent Application No. 202111275394.8, filed on October 29, 2021, the entire content of which is incorporated herein by reference.

### TECHNICAL FIELD

Embodiments of the present application relate to the field of communications, and in particular, to a data offloading method and apparatus, an electronic device and a storage medium.

### BACKGROUND

With the development of Internet technology, there are more and more network users. In order to meet the requirements of single-user peak rate and system capacity improvement, one of the most direct ways is to increase the system transmission bandwidth. Therefore, the LTE-Advanced system introduces a technology to increase the transmission bandwidth, that is, Carrier Aggregation ("CA" for short). The CA technology can aggregate multiple LTE Component Carriers ("CC" for short) to achieve a maximum transmission bandwidth of 100MHz, effectively improving the uplink and downlink transmission rates.

Carrier aggregation is the key technology of a Media Access Control ("MAC" for short) layer. According to the NR standard, it is required to transfer the data of a MAC sub-layer from a Primary Carrier Component ("PCC" for short) to a Secondary Carrier Component ("SCC" for short). Because the MAC belongs to a real-time processing sub-layer, the level of real-time coupling of carriers required for data offloading is high at the time of carrier aggregation. However, in the actual deployment network, it is difficult to ensure the above requirements, which leads to the difficulty of carrier aggregation.

### SUMMARY

The main object of the embodiments of the present application is to propose a data offloading method and apparatus, an electronic device and a storage medium, which can reduce the implementation difficulty of carrier aggregation.

To achieve the above object, an embodiment of the present application provides a data offloading method, including: detecting a performance index representing real-time coupling between a primary carrier component and a secondary carrier component; selecting a data offloading strategy according to a detection result; distributing transmission data carried in the primary carrier component to the secondary carrier component according to the selected data offloading strategy; and sending the primary carrier component and the secondary carrier component to a terminal.

To achieve the above object, an embodiment of the present application further provides a data offloading apparatus, including: a detection module, configured to detect a performance index representing real-time coupling between a primary carrier component and a secondary carrier component; a selection module, configured to select a data offloading strategy according to the detection result; a distribution module, configured to distribute transmission data carried in the primary carrier component to the secondary carrier component according to the selected data offloading strategy; and a sending module, configured to send the primary carrier component and the secondary carrier component to a terminal.

To achieve the above object, an embodiment of the present application further provides an electronic device, including: at least one processor; and a memory in communication connection with the at least one processor; wherein the memory stores instructions executable by the at least one processor, the instructions being executed by the at least one processor to enable the at least one processor to implement the above data offloading method.

To achieve the above object, an embodiment of the present application further provides a computer-readable storage medium, storing a computer program, which implements the above data offloading method when executed by a processor.

### BRIEF DESCRIPTION OF THE DRAWINGS

FIG. 1 is a flowchart one of a data offloading method according to an embodiment of the present disclosure;
FIG. 2 is a schematic diagram of an L2 protocol stack of a NR according to an embodiment of the disclosure;
FIG. 3 is a schematic diagram of a MAC sub-layer and a component carrier according to an embodiment of the disclosure;
FIG. 4 is a flowchart of data packaging of an L2 protocol stack according to an embodiment of the disclosure;
FIG. 5 is a flowchart two of a data offloading method according to an embodiment of the present disclosure;
FIG. 6 is a schematic diagram of execution steps of a scenario detection apparatus according to an embodiment of the present application;
FIG. 7 is a schematic diagram of a transmission delay measurement method according to an embodiment of the present application;
FIG. 8 is a schematic diagram of execution steps of a data offloading strategy selection apparatus according to an embodiment of the present application;
FIG. 9a is a schematic diagram of execution steps of a RLC offloading strategy implementing apparatus according to an embodiment of the present application;
FIG. 9b is a schematic diagram of execution steps of a MAC offloading strategy implementing apparatus according to an embodiment of the present application;
FIG. 10 is a schematic structural diagram of a data offloading apparatus according to an embodiment of the present application; and
FIG. 11 is a schematic structural diagram of an electronic device according to an embodiment of the present application.

### DETAILED DESCRIPTION

In order to make the objects, technical solutions and advantages of the embodiments of the present application clearer, various embodiments of the present application will be described in detail below with reference to the accompanying drawings. However, those of ordinary skill in the art can appreciate that in the various embodiments of the present application, numerous technical details are set forth in order to provide the reader with a better understanding of the present application. However, the technical solution claimed in the present application can be implemented without these technical details and various variations and modifications based on the following embodiments. The following division of various embodiments is for convenience of description and should not be construed as limiting the specific implementations of the present application, and various embodiments may be referred to in conjunction with each other without contradiction.

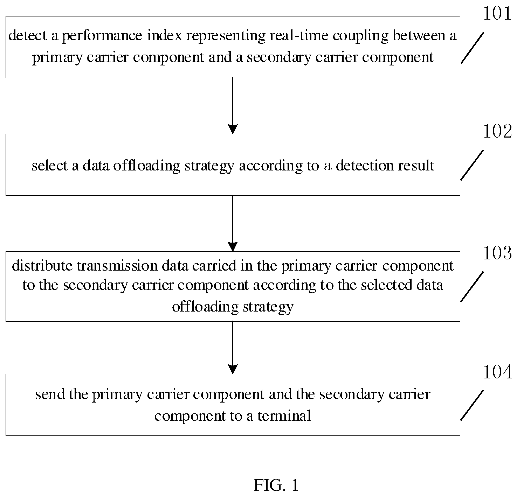

Embodiments of the present application relate to a data offloading method, as shown in FIG. 1, including the following steps.

Step 101, a performance index representing real-time coupling between a primary carrier component and a secondary carrier component is detected.

Step 102, a data offloading strategy is selected according to a detection result.

Step 103, transmission data carried in the primary carrier component is distributed to the secondary carrier component according to the selected data offloading strategy.

Step 104, the primary carrier component and the secondary carrier component are sent to a terminal.

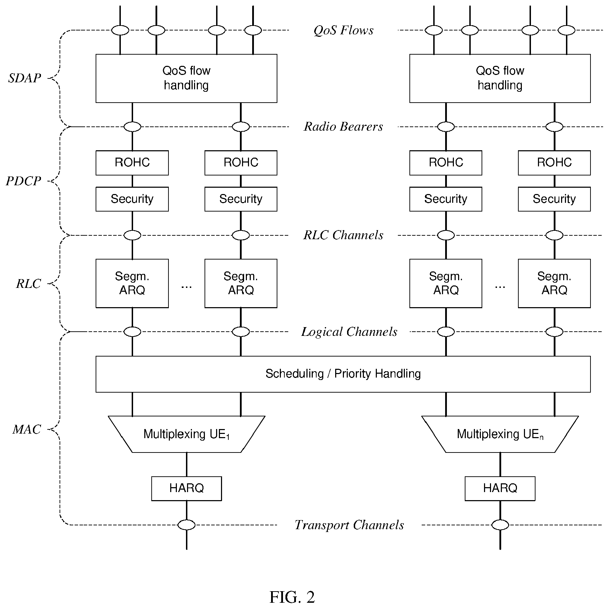

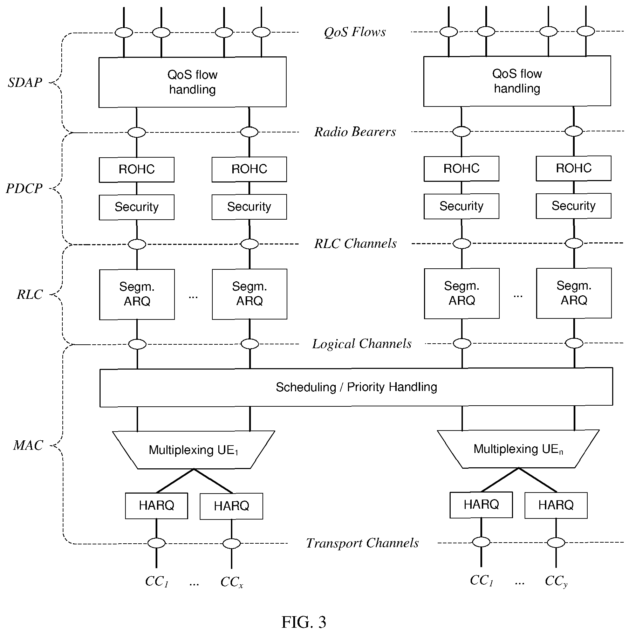

The data offloading method in the embodiment is applied to a base station device, and the base station device uses the carrier aggregation technology for data transmission in order to meet the requirements of single-user peak rate and system capacity improvement. Carrier aggregation means that the base station side aggregates two or more component carriers to provide services for a User Equipment ("UE" for short), which can significantly improve the throughput of a single user. Initially, it is stipulated that the 5G NR has up to 16 CCs; the bandwidth of each CC is different (with a maximum frequency range FR1 being 100M, and a maximum frequency range FR2 being 400M); each CC can be next to each other or spaced apart in spectrum. In carrier aggregation, the carrier that maintains RRC connection with users is called a primary carrier component or a primary cell (Pcell); the carriers other than the primary carrier component are called secondary carrier components or secondary cells (Scell). The CA, as the key technology of 4/5G two-generation communication system, has a wide range of application scenarios. Especially in the 5G communication system, due to the complexity of channel conditions and spectrum distribution, the commercial scenarios of CA are richer. The following typical application scenarios are summarized: first, when the frequency band resources are discrete, the CA technology can effectively aggregate multiple small frequency bands into a large frequency band, and effectively improve the peak rate of users; second, according to the strategy, some CCs with better channel quality are selected, or multiple CCs transmit the same data at the same time, so as to effectively improve the reliability of user data transmission. The carrier aggregation technology belongs to the MAC sub-layer technology of the L2 layer in the NR protocol stack, and the L2 protocol stack of NR is shown in FIG. 2. The NR L2 is divided into four sub-layers of Service Data Adaptation Protocol ("SDAP" for short), Packet Data Convergence Protocol ("PDCP" for short), Radio Link Control ("RLC" for short) Protocol, and MAC. The MAC sub-layer includes the functions of scheduling/sequencing (air interface resource distribution), aggregation (RLC layer data of multiple logical channels of the same UE are aggregated into one MAC packet), Hybrid Automatic Repeat reQuest ("HARQ" for short) entity management, etc., and is the sub-layer with the highest real-time requirement for the L2 layer, and needs to perform packaging with the air interface slot granularity. As shown in FIG. 3, the carrier aggregation technology needs to be implemented in the MAC sub-layer. However, because the MAC belongs to the real-time processing sub-layer, the carrier aggregation requires low transmission delay and large transmission bandwidth of two carriers. However, in the actual deployment network, it is difficult to guarantee the above requirements, which leads to that the carrier aggregation is difficult to achieve.

In the data offloading method of the present application, a performance index representing real-time coupling between a primary carrier component and a secondary carrier component is detected, according to the detection result, a data offloading strategy is selected, by detecting the transmission delay value and the transmission bandwidth value, the real-time coupling of the carrier of the device at the time is determined, so that the base station device can select different data offloading strategies upon different transmission delay values and transmission bandwidth values, and can select corresponding data offloading strategies even when the real-time coupling of the carriers is low. In addition, when the real-time coupling of the carriers is fluctuating, i.e. when the transmission delay value and the transmission bandwidth value are fluctuating, a more suitable data offloading strategy is selected. When the current transmission scenario does not meet the requirements of the transmission delay and the transmission bandwidth, the data offloading strategy can be switched. According to the selected data offloading strategy, the transmission data carried in the primary carrier component is distributed to the secondary carrier component, and the primary carrier component and the secondary carrier component are sent to a terminal, thereby realizing the data offloading of carrier aggregation and reducing the difficulty of realizing carrier aggregation.

The implementation details of the data offloading method of the present embodiment are described in detail below. The implementation details are provided for ease of understanding only, and are not necessary to implement the present embodiment.

In step 101, the base station device detects a performance index representing real-time coupling between a primary carrier component and a secondary carrier component, such as a transmission delay value and/or a transmission bandwidth value. Wherein, the transmission delay value between the primary carrier component and the secondary carrier component refers to a delay value for data to be transmitted from the primary carrier component to the secondary carrier component, the transmission bandwidth value refers to a transmission bandwidth value in which data is transmitted from the primary carrier component to the secondary carrier component, and the base station device may detect only a transmission delay value between the primary carrier component and the secondary carrier component, or detect only a transmission bandwidth value between the primary carrier component and the secondary carrier component, or detect both a transmission delay value and a transmission bandwidth value between the primary carrier component and the secondary carrier component.

In one example, the base station device may obtain a transmission delay value by the following mode: a sending device initiates a delay measurement request to a receiving device and carries a first time T1 at which the delay measurement request is transmitted in a request message; after the receiving device receives the request message, a second time T2 at which the request message is received is recorded; the receiving device sends a request acknowledgement to the sending device, and carries the first time, the second time and a third time T3 at which the acknowledgement message is sent in an acknowledgement message; the sending device receives the acknowledgement message returned by the receiving device, and records a fourth time T4 at which the acknowledgement message is received; the transmission delay value is equal to ((T4-T1)-(T3-T2))/2. Wherein, each time may be a time of a MAC layer processing moment of the device, and the transmitting device and the receiving device may both be base station devices or may include user terminals.

In this embodiment, the transmission delay value can be obtained through the above calculation, thereby making the selection of the data offloading strategy, and reducing the implementation difficulty of carrier aggregation.

In step 102, the base station device selects a data offloading strategy according to the detection result. The base station device may detect a transmission delay value and/or a transmission bandwidth value for the previous data transmission from the primary carrier component to the secondary carrier component, and select the data offloading strategy based on the detection result. The base station device may select a data offloading strategy based on an average of transmission delay values and/or an average of transmission bandwidth values detected for previous data transmissions from the primary carrier component to the secondary carrier component.

In one example, the data offloading strategy includes: a radio link control (RLC) offloading strategy and a medium access control (MAC) offloading strategy; wherein, the RLC offloading strategy includes: the transmission data is reassembled into a RLC data packet at a RLC layer, the RLC data packet is distributed to the primary carrier component and the secondary carrier component; the MAC offloading strategy includes: the transmission data is reassembled into a MAC data packet at a MAC layer, the MAC data packet is distributed to the primary carrier component and the secondary carrier component; the step that the data offloading strategy is selected according to the detection result includes: the RLC offloading strategy is selected if the transmission delay value is greater than a delay threshold, or the transmission bandwidth value is less than a bandwidth threshold; and the MAC offloading strategy is selected if the transmission delay value is less than the delay threshold and the transmission bandwidth value is greater than the bandwidth threshold. Wherein, the delay threshold and the bandwidth threshold may be manually set.

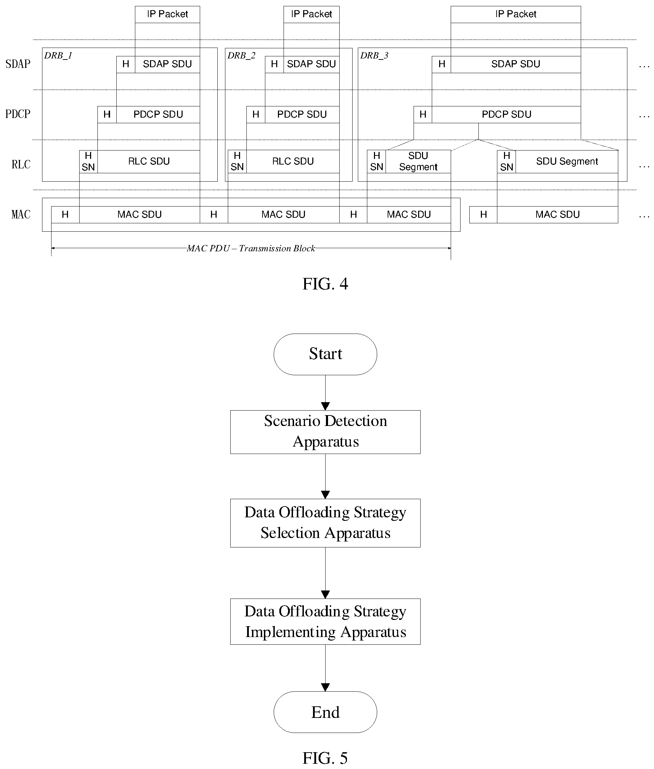

The RLC sub-layer is responsible for the Automatic Repeat Request (ARQ) function, and the SDU of each RLC is marked with a packet header to form the PDU of RLC, then delivered to the MAC layer. The data packaging flow of the L2 sub-layer is shown in FIG. 4. According to the requirements of the NR protocol, RLC entities can directly perform RLC PDU packaging without waiting for a MAC layer scheduling notification. Therefore, the MAC sub-layer and RLC sub-layer in the NR protocol are loosely coupled. Compared with LTE, the coupling between the RLC layer and the MAC layer is greatly simplified in the NR protocol. Because there is no need to couple the MAC layer, the processing of the RLC layer is greatly simplified.

In this embodiment, since the MAC layer needs low transmission delay and large transmission bandwidth between the primary carrier component and the secondary carrier component for data offloading, when the transmission delay value is less than the delay threshold and the transmission bandwidth value is greater than the bandwidth threshold, it is considered that the carrier real-time coupling is high, and the MAC offloading strategy can be selected. Because the RLC offloading strategy reassembles the transmitted data into the RLC data packet in the RLC layer, and distributes the RLC data packet to the primary carrier component and the secondary carrier component, and the processing flow of the RLC layer requires less real-time performance. Therefore, when the transmission delay value is greater than the delay threshold or the transmission bandwidth value is less than the bandwidth threshold, the carrier real-time coupling is considered to be low, so it is not appropriate to select the MAC offloading strategy and the RLC offloading strategy is selected. Therefore, the base station device can select different data offloading strategies upon different transmission delay values and transmission bandwidth values, and can select corresponding data offloading strategies even when the carrier real-time coupling is low, thereby realizing the data offloading of carrier aggregation and reducing the implementation difficulty of carrier aggregation.

In one example, prior to the step that the data offloading strategy is selected based on the detection result, the method further includes: a spectral efficiency value of the secondary carrier component is detected; before the MAC offloading strategy is selected, the method includes: it is determined that the spectral efficiency value is less than the spectral efficiency threshold. If the transmission delay value is less than or equal to the delay threshold and the transmission bandwidth value is greater than or equal to the bandwidth threshold, the method further includes: the MAC offloading strategy is selected if the secondary carrier component satisfies that the spectral efficiency value is less than a spectral efficiency threshold; and the RLC offloading strategy is selected if the secondary carrier component satisfies that the spectral efficiency value is greater than or equal to the spectral efficiency threshold.

In one example, prior to selecting the data offloading strategy according to the detection result, the step that the base station device also detects the spectral efficiency value of the secondary carrier component, and selects the data offloading strategy according to the detection result further includes: the MAC offloading strategy is selected if the spectral efficiency value is less than the spectral efficiency threshold; and the RLC offloading strategy is selected if the spectral efficiency value is greater than or equal to the spectral efficiency threshold.

In this embodiment, since implementation of data offloading at the RLC layer requires the carrier to guarantee the RLC Serial Number ("SN" for short) continuity in real time, while when the channel quality is poor, the SN continuity of the carrier cannot be guaranteed. Therefore, if the spectral efficiency value is less than the spectral efficiency threshold, the MAC offloading strategy is selected, if the spectral efficiency value is greater than or equal to the spectral efficiency threshold, the RLC offloading strategy is selected, and the MAC offloading strategy can be selected for data offloading for carrier aggregation when the current scenario does not apply to the RLC offloading strategy.

In one example, the base station device can obtain the spectral efficiency value by the following mode: channel state information (CSI) reported by the terminal is acquired; and the spectral efficiency value is acquired according to the CSI.

In step 103, the base station device distributes transmission data carried in the primary carrier component to the secondary carrier component according to the selected data offloading strategy. Meanwhile, the base station device may detect a transmission delay value and/or a transmission bandwidth value for the next carrier aggregation when data is transmitted from the primary carrier component to the secondary carrier component.

In one example, prior to distributing the MAC data packet to the primary carrier component and the secondary carrier component, the step that the base station device also acquires the air interface transmissible data amounts of the current primary carrier component and the secondary carrier component, and distributes the MAC data packet to the primary carrier component and the secondary carrier component includes: the MAC data packet is correspondingly distributed to the primary carrier component and the secondary carrier component according to the air interface transmissible data amounts, that is, the MAC data packet is distributed to the primary carrier component according to the air interface transmissible data amount of the primary carrier component, and MAC data packet is distributed to the secondary carrier component according to the air interface transmissible data amount of the secondary carrier component. Wherein, the primary carrier component and the secondary carrier component can be distributed with the maximum data amount that can be carried by the primary carrier component and the secondary carrier component respectively.

In the embodiment, the air interface transmissible data amounts of the current primary carrier component and the current secondary carrier component are obtained before the MAC data packet is distributed to the primary carrier component and the secondary carrier component, and the MAC data packet is correspondingly distributed to the primary carrier component and the secondary carrier component according to the air interface transmissible data amounts, so that the current maximum radio transmissible data amount can be configured for the secondary carrier component in real time, thereby transmitting more data amount and improving the data transmission efficiency.

In step 104, the base station device sends the primary carrier component and the secondary carrier component to a terminal.

In one example, as shown in FIG. 5, the data offloading method of the present application can be implemented by providing a scenario detection apparatus, a data offloading strategy selection apparatus, and a data offloading strategy implementing apparatus in a base station device, wherein, the scenario detection apparatus is configured to detect a scenario variable between a primary carrier component and a secondary carrier component as an input to the data offloading strategy selection apparatus; the data offloading strategy selection apparatus is configured to determine a scenario attribution according to the scenario variable and select a suitable data offloading strategy; the data offloading strategy implementing apparatus is configured to preset a set of data offloading strategies; and execute the corresponding offloading strategy according to strategy selection.

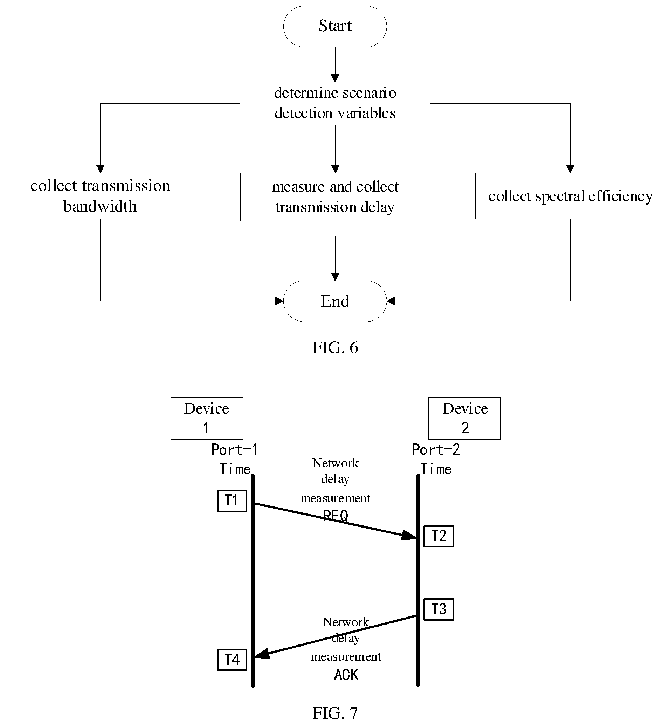

Implementing the scenario detection apparatus, as shown in FIG. 6, requires the following steps to be performed.

Step 1: scenario detection variables are determined (based on a specific UE perspective): a transmission delay between a primary carrier component and a secondary carrier component, a transmission bandwidth between the primary carrier component and the secondary carrier component, and an average spectral efficiency of each carrier.

Step 2: the transmission delay is measured and collected: the transmission time between the PCC and the i-th SCC is periodically measured, and denoted as tᵢ.

Step 3: the transmission bandwidth is collected: the transmission bandwidth between the PCC and the i-th SCC is input according to configuration, and denoted as bᵢ.

Step 4: the spectral efficiency is collected: CSI reported by an UE is collected and algorithmically converted into the spectral efficiency; the spectral efficiency of the i-th SCC is denoted as sᵢ.

Step 5: end.

The measurement schematic diagram of the transmission delay tᵢ is shown in FIG. 7, which includes the following steps.

1) The software of a device 1 initiates a delay measurement request; the hardware of the device 1 adds a T1 timestamp to a message.

2) After being forwarded through network topology, the request message reaches a device 2; the hardware of the device 2 adds a T2 timestamp to the message and transfers it to its software.

3) The software of the device 2 sends the network delay measurement ACK message to the hardware of the device 2, and the hardware fills in a timestamp T3 and sends it to the device 1.

4) After being forwarded through network topology, the ACK message arrives at the hardware of the device 1; the hardware adds a T4 timestamp.

After receiving the ACK message, the software of the device 1 calculates the network delay through T1, T2, T3 and T4; the specific calculation formula is tᵢ=T network delay = ((T4-T1)-(T3-T2))/2.

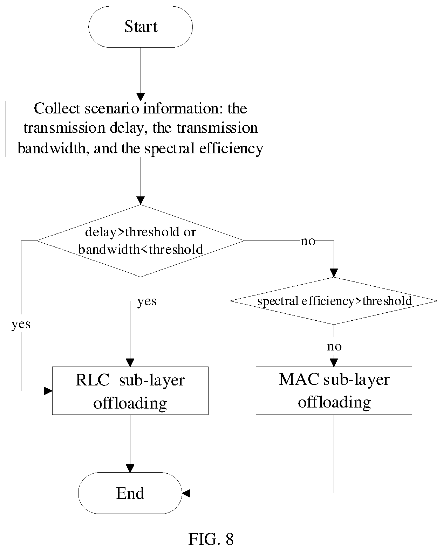

The data offloading strategy selection apparatus, as shown in FIG. 8, needs to perform the following steps.

Step 1: the scenario information is acquired: the transmission delay tᵢ, the transmission bandwidth bᵢ, and the spectral efficiency sᵢ of the i-th SCC.

Step 2: the offloading scenario is determined.

If (tᵢ > t_{threshold}) ∥ (bᵢ < b_{threshold}), then the first offloading strategy is determined, otherwise: if sᵢ > s_{threshold}, then the first offloading strategy is determined, else, the second offloading strategy is determined; (t_{threshold}, b_{threshold} and s_{threshold} are the corresponding algorithm thresholds).

Step 3: end.

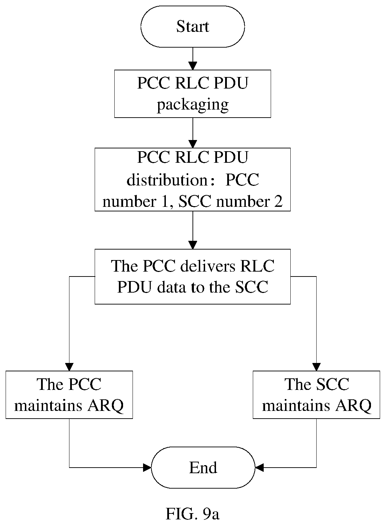

Implementing the RLC layer data offloading strategy implementing apparatus, as shown in FIG. 9a, requires the following steps to be performed.

Step 1: a RLC sub-layer offloading strategy implementing apparatus I is provided.

Step 2: a MAC sub-layer offloading strategy implementing apparatus II is provided.

Step 3: end.

Wherein, implementing the RLC sub-layer offloading strategy implementing apparatus I requires the following steps.

Step 1: the PCC performs RLC sub-layer packet header maintenance and RLC sub-layer PDU packaging.

Step 2: the PCC distributes a certain number of RLC PDUs to the SCC according to an algorithm strategy.

Step 3: the RLC PDU data distributed by the PCC is delivered to the SCC.

Step 4: after receiving the feedback from the RLC sub-layer, each CC performs independent ARQ maintenance.

Step 5: end.

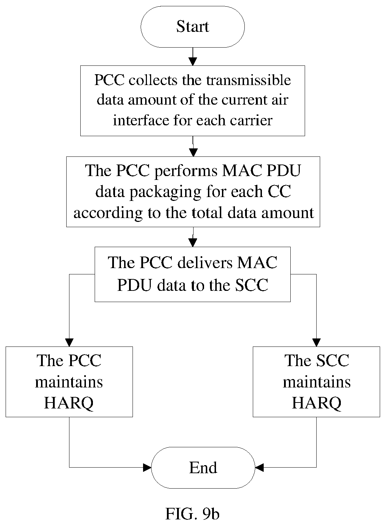

Implementing the MAC layer data offloading strategy implementing apparatus, as shown in FIG. 9b, requires the following steps to be performed.

Step 1: the amounts of data that can be transmitted by the current air interface for the PCC and SCC are collected, the primary carrier component is recorded as Dₚ, and the i-th secondary carrier component is recorded as Dᵢ.

Step 2: according to the transmissible data amounts of the primary carrier component and the secondary carrier component, the PCC performs MAC sub-layer PDU packaging.

Step 3: the PCC delivers the MAC sub-layer PDU data to the corresponding SCC.

Step 4: after receiving feedback from the MAC sub-layer, each CC performs independent HARQ maintenance, or the PCC performs HARQ maintenance uniformly.

Step 5: end.

In one implementation application example, a specific implementation is provided to describe in detail the implementation principle and operation mechanism of the method.

Step 1: an UE accesses to a certain cell which is called a primary carrier component and is denoted as PCC.

Step 2: the UE adds another inter-frequency cell as a SCC through RRC signaling.

Step 3: scenario algorithm thresholds are set: transmission delay t_{threshold}, transmission bandwidth b_{threshold}, and spectral efficiency s_{threshold}.

Step 4: transmission delays t of the PCC and SCC, transmission bandwidths b configured for the PCC and SCC, and the spectral efficiency s of the SCC are collected.

Step 5: the scenario is determined: if the scenario one is satisfied, proceed to step 6; otherwise proceed to step 8.

Step 6: the PCC performs RLC PDU packaging.

Step 7: the PCC performs RLC PDU distribution, for example, Mode 1 (even numbered PDUs are distributed to the SCC, odd numbered PDUs are distributed to the PCC); Mode 2 (distribution is performed according to the flow rate ratio of each CC, PCC 60%, SCC 40%).

Step 8: the PCC collects the data amount of air interface for each carrier.

Step 9: the PCC performs MAC PDU packaging and delivers the data to the corresponding SCC.

Finally: the SCC receives the data and delivers the data to the UE over the air interface.

The data offloading method of the embodiment has great benefit especially in the scenario with different multi-carrier attributes, such as when the transmission delay, transmission bandwidth and channel quality between multi-carriers are quite different. The adaptive selection of the carrier aggregation offloading strategy can be realized, thereby promoting the ease of use and universality of carrier aggregation and obtaining gain.

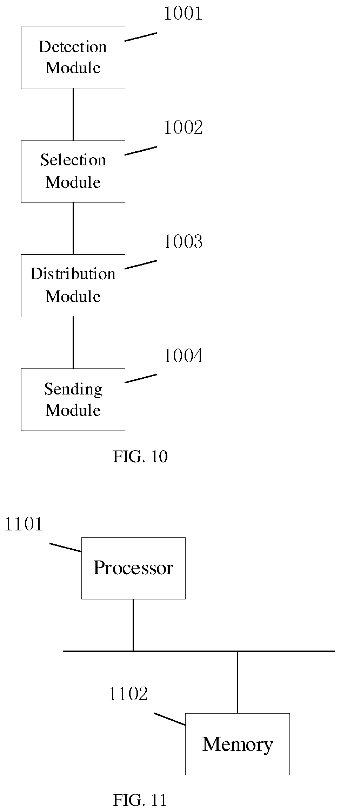

Embodiments of the present application also relate to a data offloading apparatus, as shown in FIG. 10, including the following modules.

A detection module 1001 is configured to detect a performance index representing real-time coupling between a primary carrier component and a secondary carrier component.

A selection module 1002 is configured to select a data offloading strategy according to the detection result;

A distribution module 1003 is configured to distribute transmission data carried in the primary carrier component to the secondary carrier component according to the selected data offloading strategy.

A sending module 1004 is configured to send the primary carrier component and the secondary carrier component to a terminal.

In one example, the data offloading strategy includes: a radio link control (RLC) offloading strategy and a medium access control (MAC) offloading strategy; wherein, the RLC offloading strategy includes: the transmission data is reassembled into a RLC data packet at a RLC layer, the RLC data packet is distributed to the primary carrier component and the secondary carrier component; the MAC offloading strategy includes: the transmission data is reassembled into a MAC data packet at a MAC layer, the MAC data packet is distributed to the primary carrier component and the secondary carrier component; the step that the data offloading strategy is selected according to the detection result includes: the RLC offloading strategy is selected if the transmission delay value is greater than a delay threshold, or the transmission bandwidth value is less than a bandwidth threshold; and the MAC offloading strategy is selected if the transmission delay value is less than the delay threshold and the transmission bandwidth value is greater than the bandwidth threshold.

In one example, prior to selecting the data offloading strategy based on the detection result, the method further includes: a spectral efficiency value of the secondary carrier component is detected; the step that the data offloading strategy is selected based on the detection result further includes: the MAC offloading strategy is selected if the spectral efficiency value is less than a spectral efficiency threshold; and the RLC offloading strategy is selected if the spectral efficiency value is greater than or equal to the spectral efficiency threshold.

In one example, prior to selecting the data offloading strategy based on the detection result, the method further includes: the spectral efficiency value of the secondary carrier component is detected; prior to selecting the MAC offloading strategy, the method includes that the spectral efficiency value is determined to be less than a spectral efficiency threshold.

In one example, the spectral efficiency value is obtained by the following mode: channel state information (CSI) reported by the terminal is acquired; and the spectral efficiency value is acquired according to the CSI.

In one example, prior to distributing the MAC data packet to the primary carrier component and the secondary carrier component, the method further includes: the air interface transmittable data amounts of the current primary carrier component and the secondary carrier component are acquired; the step that the MAC data packet is distributed to the primary carrier component and the secondary carrier component includes: the MAC data packet is correspondingly distributed to the primary carrier component and the secondary carrier component according to the air interface transmittable data amounts.

Embodiments of the present application also relate to an electronic device, as shown in FIG. 11, including: at least one processor 1101; a memory 1102 in communication connection with the at least one processor; wherein the memory 1102 stores instructions executable by the at least one processor 1101, the instructions being executed by the at least one processor 1101 to perform the data offloading method of any one of the above embodiments.

The memory 1102 and the processor 1101 are connected by a bus, which may include any number of interconnecting buses and bridges, and the bus connects together the various circuits of the one or more processors 1101 and the memory 1102. The bus can also connect various other circuits, such as peripheral devices, voltage regulators and power management circuits, which are well known in the art, and therefore, will not be described any further herein. A bus interface provides an interface between a bus and a transceiver. The transceiver may be one element or multiple elements, such as multiple receivers and transmitters, that provide a unit for communicating with various other apparatuses over a transmission medium. The information processed by the processor 1101 is transmitted over a wireless medium through the antenna, further, the antenna receives the information and delivers the information to the processor 1101.

The processor 1101 is responsible for managing the bus and general processing, and may also provide various functions including timing, peripheral interfaces, voltage regulation, power management and other control functions. The memory 1102 may be configured to store information used by the processor in performing operations.

An embodiment of the present application relates to a computer-readable storage medium, storing a computer program. The computer program, when executed by a processor, implements the method embodiments described above.

That is, those skilled in the art can understand that all or part of the steps in the method of the above embodiments can be completed by instructing related hardware through a program, which is stored in a storage medium and includes several instructions to enable a device (which may be a single chip microcomputer, a chip, etc.) or a processor to execute all or part of the steps of the methods of various embodiments of the present application. The aforementioned storage medium includes various media capable of storing program codes, such as a USB flash disk, a mobile hard disk, a Read-Only Memory (ROM), a Random Access Memory (RAM), a magnetic disk, or an optical disk.

## Claims

1. A data offloading method, comprising:
detecting a performance index representing real-time coupling between a primary carrier component and a secondary carrier component;
selecting a data offloading strategy according to a detection result;
distributing transmission data carried in the primary carrier component to the secondary carrier component according to the selected data offloading strategy; and
sending the primary carrier component and the secondary carrier component to a terminal.

2. The data offloading method of claim 1, wherein the performance index comprises a transmission delay value and/or a transmission bandwidth value.

3. The data offloading method of claim 2, wherein the data offloading strategy comprises: a radio link control (RLC) offloading strategy and a medium access control (MAC) offloading strategy;
wherein the RLC offloading strategy comprises: reassembling the transmission data into a RLC data packet at a RLC layer, distributing the RLC data packet to the primary carrier component and the secondary carrier component;
the MAC offloading strategy comprises: reassembling the transmission data into a MAC packet at a MAC layer, distributing the MAC packet to the primary carrier component and the secondary carrier component;
selecting a data offloading strategy according to a detection result comprises:
selecting the RLC offloading strategy if the transmission delay value is greater than a delay threshold, or the transmission bandwidth value is less than a bandwidth threshold; and
selecting the MAC offloading strategy if the transmission delay value is less than or equal to the delay threshold and the transmission bandwidth value is greater than or equal to the bandwidth threshold.

4. The data offloading method of claim 3, wherein prior to selecting the data offloading strategy based on the detection result, the method further comprises: detecting a spectral efficiency value of the secondary carrier component;
if the transmission delay value is less than or equal to the delay threshold and the transmission bandwidth value is greater than or equal to the bandwidth threshold, the method further comprises:
selecting the MAC offloading strategy if the secondary carrier component simultaneously satisfies that the spectral efficiency value is less than a spectral efficiency threshold; and
selecting the RLC offloading strategy if the secondary carrier component simultaneously satisfies that the spectral efficiency value is greater than or equal to the spectral efficiency threshold.

5. The data offloading method of claim 4, wherein the spectral efficiency value is obtained by the following mode:
acquiring channel state information (CSI) reported by the terminal; and
acquiring the spectral efficiency value according to the CSI.

6. The data offloading method of claim 3, wherein prior to distributing the MAC packet to the primary carrier component and the secondary carrier component, the method further comprises:
acquiring a air interface transmittable data amount of the current primary carrier component and a air interface transmittable data amount of the secondary carrier component;
distributing the MAC packet to the primary carrier component and the secondary carrier component comprises:
distributing the MAC data packet to the primary carrier component based on the air interface transmissible data amount of the primary carrier component, and distributing the MAC data packet to the secondary carrier component based on the air interface transmissible data amount of the secondary carrier component.

7. A data offloading apparatus, comprising:
a detection module, configured to detect a performance index representing real-time coupling between a primary carrier component and a secondary carrier component;
a selection module, configured to select a data offloading strategy according to the detection result;
a distribution module, configured to distribute transmission data carried in the primary carrier component to the secondary carrier component according to the selected data offloading strategy; and
a sending module, configured to send the primary carrier component and the secondary carrier component to the terminal.

8. An electronic device, comprising:
at least one processor; and
a memory in communication connection with the at least one processor; wherein
the memory stores instructions executable by the at least one processor, the instructions being executed by the at least one processor to enable the at least one processor to perform the data offloading method of any one of claims 1 to 6.

9. A computer-readable storage medium storing a computer program, wherein the computer program when executed by a processor implements the data offloading method according to any one of claims 1 to 6.
